# EUROPÄISCHE PATENTSCHRIFT

(11) **EP 3 859 176 B1**
(45) Veröffentlichungstag und Bekanntmachung des Hinweises auf die Patenterteilung: **14.06.2023**
(21) Anmeldenummer: 21154296.4
(22) Anmeldetag: 29.01.2021
(51) Int. Cl.: B66F 9/07, B66F 9/14, F16C 29/00, A47B 88/493, F16C 3/03, F16C 29/04, F16C 29/06

(54) **TELESKOPSCHIENE**
TELESCOPIC RAIL
RAIL TÉLESCOPIQUE

(30) Priorität: 03.02.2020 DE 102020102644
(43) Veröffentlichungstag der Anmeldung: 04.08.2021
(73) Patentinhaber: Liebherr-Verzahntechnik GmbH, 87437 Kempten (DE)
(72) Erfinder: Hiemer, Lukas, 87452 Altusried (DE); Hößle, Florian, 87509 Immenstadt (DE); Zollitsch, Markus, 87490 Haldenwang (DE); Mattern, Thomas, 87669 Rieden (DE)
(74) Vertreter: Behr, Wolfgang

(56) Entgegenhaltungen:
- WO-A1-2008/117852
- DE-A1- 2 904 116
- JP-A- 2009 144 902
- US-A- 4 489 990
- US-A1- 2013 127 319
- US-A1- 2015 369 280

## Beschreibung

Die vorliegende Erfindung betrifft eine Teleskopschiene mit mindestens einem ersten und einem zweiten Schienenelement, welche jeweils über Wälzkörper längsverschieblich an einem dritten, mittleren Schienenelement gelagert sind.

Eine solche Teleskopschiene ist aus der früheren Anmeldung der Anmelderin DE 10 2018 118 973 bekannt.

Druckschriften EP 3 444 220 A1 und AT 505 757 A4 zeigen jeweils lineare Auszugseinheiten mit einem Teleskopauszug.

Druckschrift DE10153831A1 zeigt einen Führungswagen für eine Profilschienenführung, welche als Linearlager mit umlaufenden Wälzkörpern ausgebildet ist, wobei der Führungswagen Führungsteile aufweist, die im wesentlichen C-förmige, geschlossene Umlaufkanäle bilden, welche jeweils die Wälzkörper vollständig außerhalb einer Tragzone führen und formschlüssig befestigt sind.

Eine Teleskopschiene gemäß dem Oberbegriff von Anspruch 1 ist aus Druckschrift JP 2009-144902 A bekannt.

Druckschriften WO 2008/117852 A1, US 2015/369280 A1, US 4 489 990 A, DE 29 04 116 A1 und US 2013/127319 A1 zeigen weitere Teleskopschienen.

Aufgabe der vorliegenden Erfindung ist es, eine verbesserte Teleskopschiene zur Verfügung zu stellen.

Diese Aufgabe wir erfindungsgemäß durch eine Teleskopschiebe gemäß Anspruch 1 gelöst. Bevorzugte Ausgestaltungen der vorliegenden Erfindung sind Gegenstand der Unteransprüche.

Die vorliegende Erfindung umfasst eine Teleskopschiene mit mindestens einem ersten und einem zweiten Schienenelement, welche jeweils über Wälzkörper längsverschieblich an einem dritten, mittleren Schienenelement gelagert sind, wobei die Wälzkörper in mindestens einer Umlaufbahn umlaufen. Dabei ist vorgesehen, dass die Umlaufbahn an dem mittleren Schienenelement angeordnet ist. Dies erlaubt eine besonders kompakte Bauweise der Teleskopschiene.

Erfindungsgemäß weist die Umlaufbahn eine erste und eine zweite, jeweils in Auszugsrichtung der Teleskopschiene verlaufende Teilstrecke auf, wobei die Teilstrecken an ihren Enden jeweils über eine Umlenkstrecke miteinander verbunden sind. Hierdurch wird eine geschlossene Umlaufbahn für die Wälzkörper zur Verfügung gestellt.

Erfindungsgemäß dient die erste Teilstrecke der Lagerung des ersten Schienenelementes an dem mittleren Schienenelement und die zweite Teilstrecke der Lagerung des zweiten Schienenelementes an dem mittleren Schienenelement. Erfindungsgemäß umfassen damit beide Teilstrecken jeweils eine Tragezone, an welcher das erste bzw. das zweite Schienenelement längsverschieblich gelagert ist.

Diese Ausgestaltung erlaubt eine besonders kompakte Ausgestaltung, da beide Teilstrecken der Lagerung dienen. Dies wir dadurch ermöglicht, dass die Umlaufbahn an dem mittleren Schienenelement angeordnet ist. Zudem verbessert sich das Umlaufverhalten der Wälzkörper und/oder die Auszugseigenschaften der Teleskopschiene, da die Wälzkörper auf beiden Teilstrecken bei der jeweiligen Relativbewegung zwischen dem ersten bzw. zweiten Schienenelement und dem mittleren Schienenelement einer Abwälzbewegung unterliegen.

Gemäß einer Ausführungsform der vorliegenden Erfindung wälzen die Wälzkörper zur Lagerung des ersten Schienenelementes zwischen einer Führungsbahn der ersten Teilstrecke und einer Führungsbahn des ersten Schienenelementes ab.

Gemäß einer Ausführungsform der vorliegenden Erfindung wälzen die Wälzkörper zur Lagerung des zweiten Schienenelementes zwischen einer Führungsbahn der zweiten Teilstrecke und einer Führungsbahn des zweiten Schienenelementes ab.

Gemäß einer Ausführungsform der vorliegenden Erfindung sind die jeweiligen Führungsbahnen, zwischen welchen die Wälzkörper abwälzen, vertikal übereinander angeordnet. Hierdurch wird der Verschleiß der Wälzkörper verringert.

Gemäß einer Ausführungsform der vorliegenden Erfindung führen die Umlenkstrecken die Wälzkörper jeweils aus der einen Teilstrecke nach oben oder unten heraus und nach der Umlenkung in die Ebene der anderen Teilstrecke hinein. Dies bringt die Wälzkörper beim Verlassen der Tragezone der einen Teilstrecke außer Kontakt mit der Führungsbahn des ersten oder zweiten Schienenelements und beim Eintritt in die Tragezone der anderen Teilstrecke wieder in Kontakt mit der Führungsbahn des anderen Schienenelements. Die Bewegung nach oben oder unten erlaubt dabei einen verschleißarmen Austritt bzw. Eintritt.

Gemäß einer Ausführungsform der vorliegenden Erfindung weist die Umlenkstrecke zum Heraus- bzw. Hineinführen der Wälzkörper einen einer Führungsbahn des ersten bzw. zweiten Schienenelementes vertikal gegenüberliegenden, nach oben oder unten verlaufenden Führungsbahn-Bereich auf.

Bevorzugt mündet dieser zumindest entlang der Kontaktstrecke mit dem Wälzkörper tangential in eine Führungsbahn der jeweiligen Teilstrecke. Hierdurch wird ein ruckfreier Aus- bzw. Eintritt der Wälzkörper ermöglicht. Insbesondere kann der nach oben oder unten verlaufenden Führungsbahn-Bereich einen gekrümmten Abschnitt aufweisen, welcher tangential an die Führungsbahn der jeweiligen Teilstrecke anschließt.

Gemäß einer Ausführungsform der vorliegenden Erfindung weist die Umlenkstrecke weiterhin eine dem nach oben oder unten verlaufenden Führungsbahn-Bereich gegenüberliegende Anlaufschräge auf, welche die Wälzkörper bei entsprechender Bewegungsrichtung der Wälzkörper in die Umlenkstrecke zwingt. Der nach oben oder unten verlaufende Führungsbahn-Bereich und die Anlaufschräge bilden dabei zusammen eine Einlass- bzw. Auslassöffnung der Umlenkstrecke.

Gemäß einer Ausführungsform der vorliegenden Erfindung liegen die beiden Teilstrecken in der gleichen horizontalen Ebene. Dies erlaubt einen besonders flach bauenden Auszug.

Gemäß einer Ausführungsform der vorliegenden Erfindung sind die Umlenkstrecken spiegelsymmetrisch bezüglich einer zwischen den beiden Teilstrecken verlaufenden vertikalen Ebene.

Gemäß einer ersten Ausführungsform der vorliegenden Erfindung erstreckt sich die Umlaufbahn und/oder die Teilstrecken der Umlaufbahn über die gesamte Länge, in welcher die jeweiligen Auszugselemente in Auszugsrichtung längsverschieblich aneinander gelagert ist.

Gemäß einer zweiten Ausführungsform der vorliegenden Erfindung sind dagegen mindestens zwei Umlaufbahnen und/oder Teilstrecken von Umlaufbahnen in Auszugsrichtung hintereinander angeordnet, so dass die jeweiligen Auszugselemente in Auszugsrichtung über mindestens zwei Umlaufbahnen und/oder Teilstrecken von Umlaufbahnen längsverschieblich aneinander gelagert sind.

Gemäß einer Ausführungsform der vorliegenden Erfindung sind die Umlenkstrecken jeweils als ein mindestens zweiteiliges Bauelement gefertigt, wobei eine Führungsbahn für die Wälzkörper zwischen einem oberen und einem unteren Teilelements des Bauelements verläuft. Die zweiteilige Ausgestaltung erlaubt eine kostengünstigere Fertigung.

Bevorzugt ist die Führungsbahn jeweils in die entsprechende Seite des oberen und des unteren Teilelements des Bauelements gefräst.

Erfindungsgemäß umgreifen die erste und/oder die zweite Teilstrecke die Wälzkörper über mehr als 180°. Hierdurch sind diese an der Teilstrecke gegen Herausfallen gesichert.

Bevorzugt ist die hierfür vorgesehene Führungsbahn aus mindestens zwei Teilelementen zusammengesetzt. Dies erlaubt wiederum eine einfachere Fertigung.

Bevorzugt verläuft die Teilungsfuge beabstandet zu einem Druckpunkt der Wälzköper und/oder außermittig. Die Anordnung der Teilungsfuge neben dem Druckpunkt verhindert einen erhöhten Verschleiß, welcher sich ergeben würde, wenn die Teilungsfuge im Druckpunkt angeordnet wäre. Insbesondere kann die Teilungsfuge die Führungsbahn dabei asymmetrisch und/oder in zwei unterschiedlich große Teile aufteilen.

Diese Ausgestaltung ist auch unabhängig von dem oben beschriebenen Hauptaspekt der vorliegenden Erfindung Gegenstand der vorliegenden Anmeldung.

Insbesondere umfasst die vorliegende Erfindung dabei eine Teleskopschiene mit mindestens zwei über Wälzkörper längsverschieblich aneinander gelagerten Schienenelementen, wobei die Wälzkörper in einer Tragezone in einer Führungsbahn geführt sind, welche diese über mehr als 180° umgreift. Dieser Aspekt der vorliegenden Erfindung ist dadurch gekennzeichnet, dass die Führungsbahn aus mindestens zwei Teilelementen zusammengesetzt ist, wobei die Teilungsfuge beabstandet zu einem Druckpunkt der Wälzköper und/oder außermittig entlang der Führungsbahn verläuft.

Die Anordnung der Teilungsfuge neben dem Druckpunkt und/oder außermittig verhindert einen erhöhten Verschleiß, welcher sich ergeben würde, wenn die Teilungsfuge im Druckpunkt angeordnet wäre. Insbesondere kann die Teilungsfuge die Führungsbahn dabei asymmetrisch und/oder in zwei unterschiedlich große Teile aufteilen.

Insbesondere können die Wälzkörper hierbei in einer Umlaufbahn umlaufen.

Weiterhin kann die Teleskopschiene durch einzelne, mehrere oder alle Merkmale, welche oben im Hinblick auf den Hauptaspekt beschrieben wurden, gekennzeichnet sein.

Im Folgenden werden mögliche Ausgestaltungen der vorliegenden Erfindung, welche bei beiden Aspekten zum Einsatz kommen können, näher beschrieben.

Gemäß einer Ausführungsform der vorliegenden Erfindung handelt es sich bei den Wälzkörpern um Kugeln. Bevorzugt weisen die Führungsbahnen einen zumindest teilkreisförmigen Querschnitt auf.

Gemäß einer Ausführungsform der vorliegenden Erfindung laufen die Wälzkörper ohne Käfig frei in der Umlaufbahn um.

Gemäß einer Ausführungsform der vorliegenden Erfindung erstrecken sich das erste und das zweite Schienenelement entlang der Seitenflächen des mitterlen Schienenelements.

Gemäß einer Ausführungsform der vorliegenden Erfindung sind an dem mittleren Schienenelement mindestens zwei vertikal übereinander angeordnete Umlaufbahnen vorgesehen sind, zwischen welchen das erste und/oder das zweite Schienenelement geführt sind.

Gemäß einer Ausführungsform der vorliegenden Erfindung sind die Schienenelemente über eine Schienen-Synchronisierungsanordnung mechanisch so zwangsgekoppelt, dass bei einer Längsverschiebung des ersten Schienenelementes gegenüber dem zweiten Schienenelement das mittlere Schienenelement sowohl gegenüber dem ersten als auch dem zweiten Schienenelement längsverschoben wird.

Bevorzugt ist die Schienen-Synchronisierungsanordnung so ausgelegt, dass die Längsverschiebung des ersten Schienenelementes gegenüber dem mittleren Schienenelement der Längsverschiebung des mittleren Schienenelementes gegenüber dem zweiten Schienenelement entspricht.

Gemäß einer Ausführungsform der vorliegenden Erfindung umfasst die Schienen-Synchronisierungsanordnung ein Ritzel, welches am mittleren Schienenelement gelagert ist und mit Zahnstangen, welche am ersten und am zweiten Schienenelement vorgesehen sind, kämmt.

Alternativ oder zusätzlich kann die Schienen-Synchronisierungsanordnung mindestens ein Zugelement, insbesondere ein Seil oder Band, umfassen, dessen Enden an dem ersten und dem zweiten Schienenelement befestigt sind und welches über ein am mittleren Schienenelement vorgesehenen Umlenkelement umgelenkt wird. Bevorzugt sind zwei Zugelemente vorgesehen, welche in entgegengesetzte Richtungen wirken.

Gemäß einer Ausführungsform der vorliegenden Erfindung ist die Schienen-Synchronisierungsanordnung so ausgestaltet, wie dies aus der früheren Anmeldung der Anmelderin DE 10 2018 118 973 bekannt ist. Der Inhalt der DE 10 2018 118 973 wird daher vollumfänglich um Gegenstand der vorliegenden Anmeldung gemacht.

Gemäß einer Ausführungsform der vorliegenden Erfindung umfasst die Teleskopschiene einen Antrieb, welcher an dem ersten oder zweiten Schienenelement angreift, um die Schienenelemente gegeneinander zu verschieben.

Gemäß einer Ausführungsform der vorliegenden Erfindung erfolgt der Antrieb über einen umlaufenden Riemen, welcher über einen Mitnehmer mit dem ersten oder zweiten Schienenelement gekoppelt ist.

Gemäß einer Ausführungsform der vorliegenden Erfindung umgreift das mittlere Schienenelement das erste und/oder zweite Schienenelement auf der Unter- und Oberseite.

Gemäß einer Ausführungsform der vorliegenden Erfindung weist das erste und/oder zweite Schienenelement auf der Unter- und der Oberseite Führungsbahnen auf, auf welcher die Wälzkörper abwälzen.

Die vorliegende Erfindung umfasst weiterhin ein Werkstück-Handling-System mit mindestens einer Teleskopschiene, wie sie oben beschrieben wurde.

Gemäß einer Ausführungsform der vorliegenden Erfindung ist bei dem Werkstück-Handling-System ein Handling-Element für Werkstücke, insbesondere ein Greifer, eine Gabel und/oder Ablageplatte, über mindestens zwei Teleskopschienen an einem Basiselement angeordnet.

Gemäß einer Ausführungsform der vorliegenden Erfindung weist das Basiselement eine oder mehrere Bewegungsachsen auf. Insbesondere kann das Basiselement über die eine oder mehreren Bewegungsachsen in der Höhe und/oder entlang einer Bahn verfahren werden.

In einer möglichen Ausgestaltung der vorliegenden Erfindung ist vorgesehen, dass es sich um ein Regalbediengerät für ein Palettenspeichersystem handelt, wobei das Handling-Element bevorzugt zum Einbringen und/oder Entnehmen von Werkstücken und/oder Paletten in Speicherfächer dient.

Insbesondere kann das Regalbediengerät und das Palettenspeichersystem so ausgestaltet sein, wie dies aus der DE 10 2016 009 000 A1 bekannt ist. Der Inhalt der DE 10 2016 009 000 A1 wird daher vollumfänglich zum Gegenstand der vorliegenden Erfindung gemacht.

Die vorliegende Erfindung wird nun anhand von Zeichnungen und Ausführungsbeispielen näher erläutert.

Dabei zeigen:
- Fig. 1: ein erstes Ausführungsbeispiel einer erfindungsgemäßen Teleskopschiene in einer perspektivischen Darstellung,
- Fig. 2a: das in Fig. 1 gezeigte Ausführungsbeispiel in einer Draufsicht mit teilweise freigelegten Elementen,
- Fig. 2b: das in Fig. 1 gezeigte Ausführungsbeispiel in einer Seitenansicht mit teilweise freigelegten Elementen,
- Fig. 3: eine Detailansicht des in Fig. 1 gezeigten Ausführungsbeispiels in einer perspektivischen Darstellung mit teilweise freigelegten Elementen,
- Fig. 4: eine Detailansicht der in Fig. 2a enthaltenen Darstellung,
- Fig. 5: eine Detailansicht der in Fig. 2b enthaltenen Darstellung,
- Fig. 6: eine weitere Detailansicht des in Fig. 1 gezeigten Ausführungsbeispiels in einer perspektivischen Darstellung mit teilweise freigelegten Elementen,
- Fig. 7: eine Schnittansicht durch ein Ausführungsbeispiel einer erfindungsgemäß für die Umlaufbahn eingesetzten Führungsbahn,
- Fig. 8a: ein zweites Ausführungsbeispiels einer erfindungsgemäßen Teleskopschiene in einer Draufsicht mit teilweise freigelegten Elementen,
- Fig. 8b: das mittlere Schienenelement des in Fig. 8 gezeigten Ausführungsbeispiels in einer perspektivischen Darstellung,
- Fig. 9: ein Ausführungsbeispiel eines Werkstück-Handling-Systems in Form eines Regalbediengeräts gemäß der vorliegenden Erfindung und
- Fig. 10: ein Ausführungsbeispiel eines Palettenspeichersystems mit einem erfindungsgemäßen Regalbediengerät.

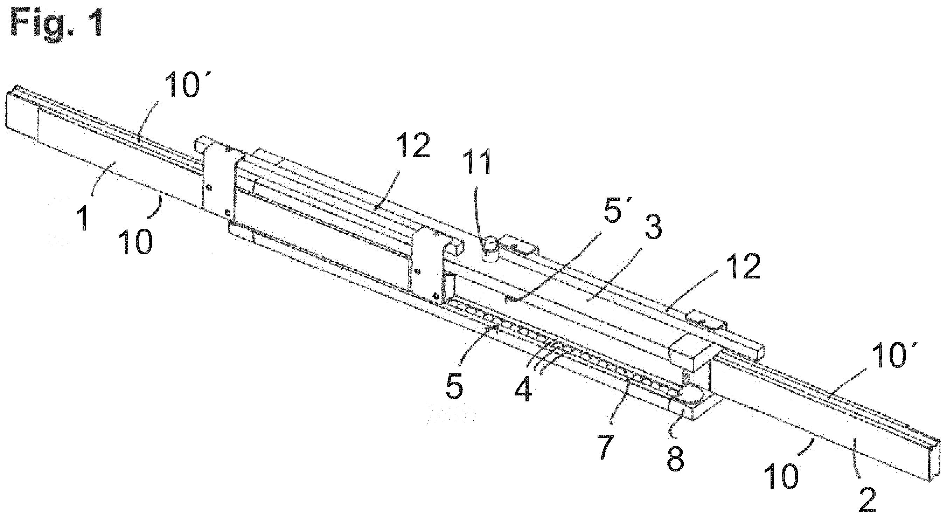

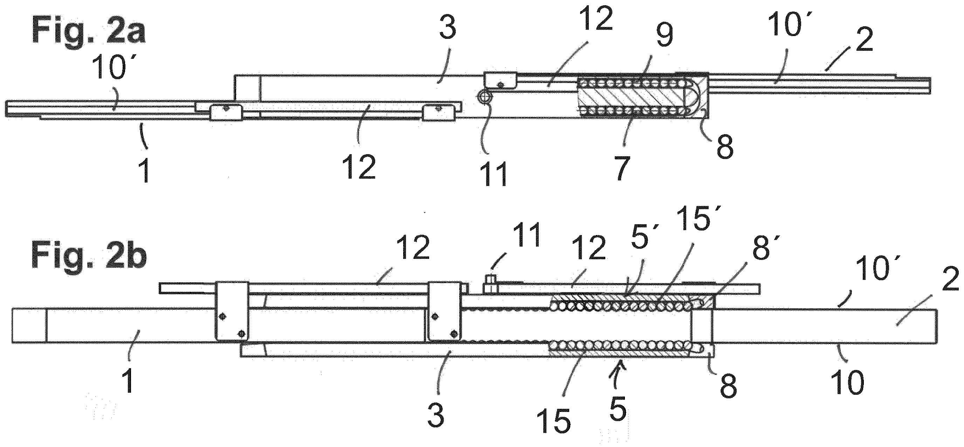

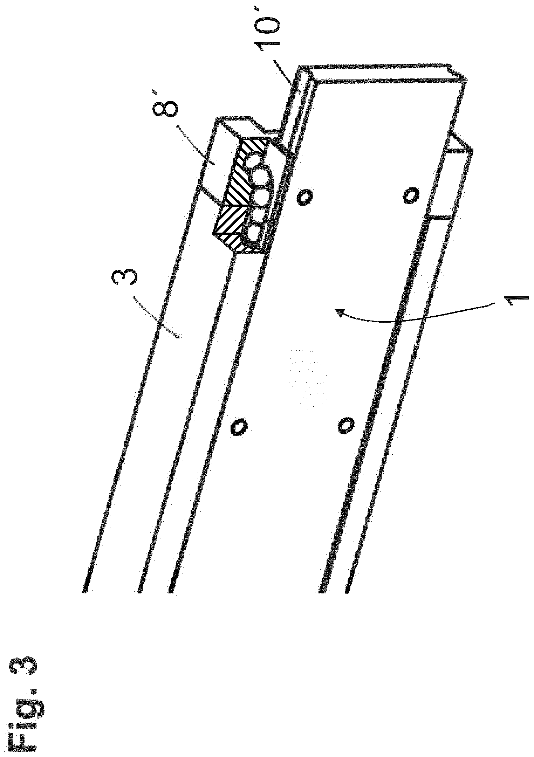

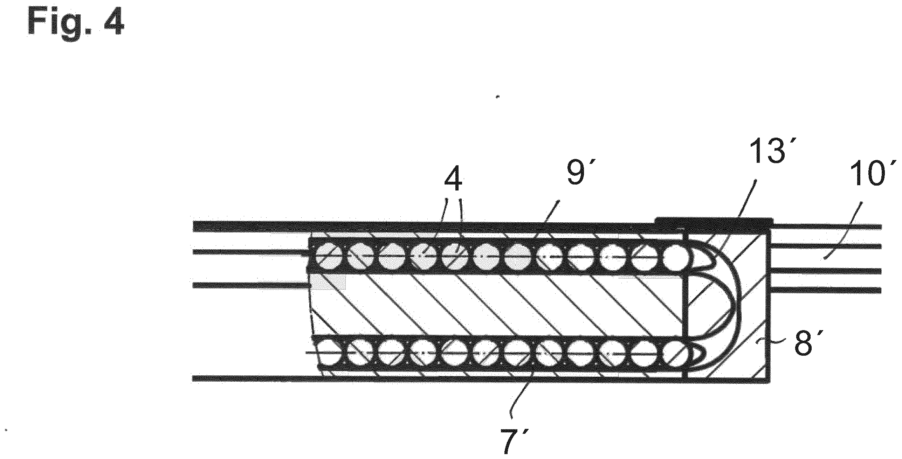

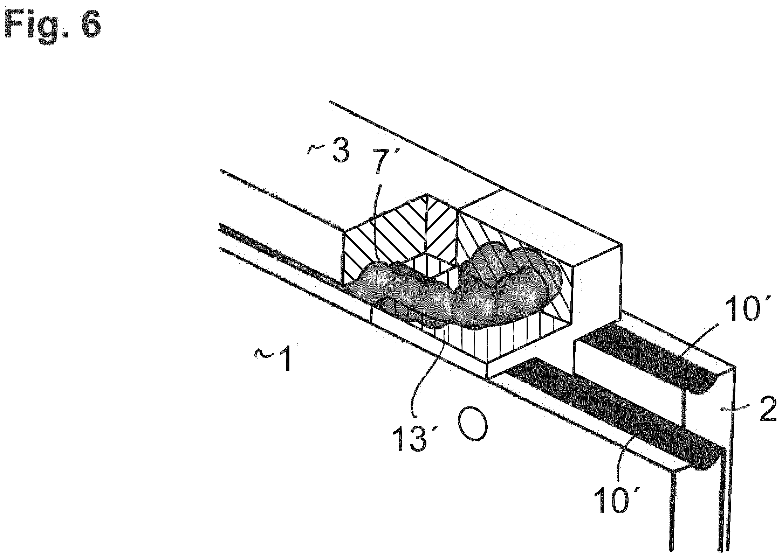

Figuren 1 bis 6 zeigen ein erstes Ausführungsbeispiel einer erfindungsgemäßen Teleskopschiene.

Die Teleskopschiene umfasst ein erstes Schienenelement 1 sowie ein zweites Schienenelement 2, welche jeweils längsverschieblich an einem mittleren Schienenelement 3 gelagert sind.

Die Lagerung erfolgt über Wälzlager 5 mit Wälzkörpern 4, bei welchen es sich im Ausführungsbeispiel um Kugeln handelt. Die Wälzkörper wälzen hierbei jeweils zwischen entsprechenden Führungsbahnen 10, 10' des ersten und zweiten Schienenelementes sowie diesen gegenüberliegenden Führungsbahnen 15, 15' des mittleren Schienenelementes 3 ab, welche damit eine Tragezone bilden.

Die Führungsbahnen weisen im Ausführungsbeispiel jeweils eine konkave, an die Form des Wälzkörpers angepasste Form auf, welche den Wälzkörper daher zum einem im Bereich des Druckpunktes trägt und zudem seitlich führt.

Im Ausführungsbeispiel umgreift das mittlere Schienenelement 3 das erste und das zweite Schienenelement jeweils auf der Ober- und der Unterseite. Die Lagerung erfolgt über zwei Wälzlager 5 und 5`, welche das erste und das zweite Schienenelement jeweils auf ihrer Unter- und Oberseite führen. Hierfür liegen die Führungsbahnen 10, 10' des ersten und zweiten Schienenelementes den Führungsbahnen 15, 15' des mittleren Schienenelementes 3 vertikal gegenüber.

Die Wälzlager sind erfindungsgemäß so ausgestaltet, dass die Wälzkörper 4 in einer Umlaufbahn umlaufen, welche an dem mittleren Schienenelement 3 angeordnet ist.

Hierfür weisen die Wälzlager 5 und 5' im Ausführungsbeispiel jeweils eine erste und eine zweite, in Auszugsrichtung der Teleskopschiene verlaufende lineare Teilstrecke 7, 9 bzw. 7', 9' auf, wobei die Teilstrecken an ihren Enden jeweils über eine Umlenkstrecke 8 bzw. 8` miteinander verbunden sind und so den Umlauf für die Wälzkörper bilden.

Die erste Teilstrecke 7 bzw. 7` dient im Ausführungsbeispiel jeweils der Lagerung des ersten Schienenelementes 1 an dem mittleren Schienenelement 3 und die zweite Teilstrecke 9, 9` der Lagerung des zweiten Schienenelementes 2 an dem mittleren Schienenelement 3. Beide Teilstrecken, welche wechselseitig als Kugelvorlauf und als Kugelrücklauf des Kugelumlaufs dienen, haben daher eine Lagerungsfunktion für eines der beiden Schienenelemente 1 oder 2 und weisen dementsprechend eine Tragezone auf, welche durch die jeweilige Teilstrecke gebildet wird.

Bei einer Auszugbewegung des Teleskopauszugs wälzen daher Wälzkörper 4 zur Lagerung des ersten Schienenelementes 1 zwischen der jeweiligen Führungsbahn 15, 15' der ersten Teilstrecke 7, 7' und der zugeordneten Führungsbahn 10, 10` des ersten Schienenelementes 1 ab, werden von einer der Umlenkstrecken 8, 8' auf die zweite Teilstrecke 9, 9' umgelenkt und wälzen dort zur Lagerung des zweiten Schienenelementes 3 zwischen der jeweiligen Führungsbahn 15, 15' der zweiten Teilstrecke 9 und einer Führungsbahn 10, 10` des zweiten Schienenelementes 3 ab.

Zur Umlenkung der Wälzkörper werden diese zunächst außer Eingriff mit der jeweiligen Führungsbahn 10, 10` des ersten oder zweiten Schienenelementes gebracht. Hierfür werden sie bei dem oberen Wälzlager 5' durch die Umlenkstrecke aus der Führungsbahn 10` nach oben hin angehoben, bei dem unteren Wälzlager 5 dagegen aus der Führungsbahn 10 nach unten hin abgesenkt. Nach der Umlenkung um 180° werden die Wälzkörper 4 dementsprechend wieder mit der jeweiligen Führungsbahn 10, 10' des ersten oder zweiten Schienenelementes in Eingriff gebracht, und hierfür bei dem oberen Wälzlager 5' durch die Umlenkstrecke nach unten hin in die Führungsbahn 10` abgesenkt und bei dem unteren Wälzlager 5 nach oben hin in die Führungsbahn 10 angehoben.

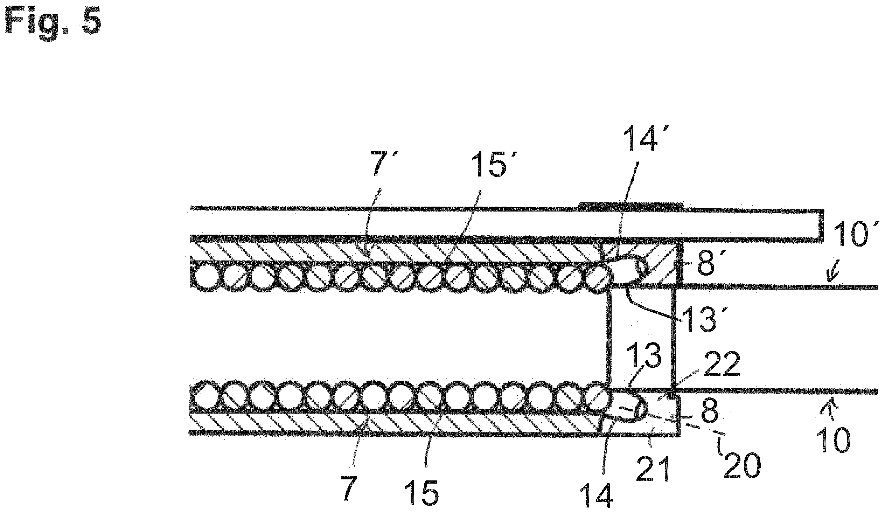

Wie insbesondere in Fig. 5 ersichtlich, weisen die Umlenkelemente hierfür einen an die jeweilige Führungsbahn 15, 15' der Teilstrecken 7, 7` bzw. 9,9` anschließenden nach oben oder unten verlaufenden Führungsbahn-Bereich 14, 14` auf. Hierdurch vergrößert sich nach dem Verlassen der Teilstrecke der Abstand zwischen dem Führungsbahn-Bereich 14, 14` und der gegenüberliegenden Führungsbahn 10, 10', so dass die Wälzkörper außer Last kommen, bzw. verringert sich vor dem Eintreten in die Teilstrecke der Abstand zwischen dem Führungsbahn-Bereich 14, 14` und der gegenüberliegenden Führungsbahn 10, 10', so dass die Wälzkörper in Last kommen.

Die nach oben oder unten verlaufenden Führungsbahn-Bereiche 14, 14` wirken jeweils mit einer ihnen gegenüberliegenden Anlaufschräge 13, 13' zusammen, welche die Wälzkörper 4 bei entsprechender Bewegungsrichtung in die Umlenkstrecke 8 leiten. Der nach oben oder unten verlaufenden Führungsbahn-Bereich 14, 14` bildet damit zusammen mit der jeweiligen Anlaufschräge 13, 13' eine Eintritts- bzw.

Austrittsöffnung der Umlenkstrecke, wobei die Anlaufstrecke 13, 13' gegenüber dem an die Führungsbahn 15, 15' der Teilstrecke 7, 7` bzw. 9,9' anschließenden Ende des nach oben oder unten verlaufenden Führungsbahn-Bereichs 14, 14' in Auszugsrichtung zurückversetzt beginnt.

Im Ausführungsbeispiel geht der nach oben oder unten verlaufende Führungsbahn-Bereich 14, 14' tangential und damit ohne einen Knick in die Führungsbahn 15, 15' der jeweiligen Teilstrecke über. Dies gilt zumindest in dem Bereich, in welchem die jeweiligen Führungsbahnen mit den Wälzkörpern in Kontakt stehen, d.h. insbesondere im Bereich des Druckpunktes. Im Ausführungsbeispiel weist der nach oben oder unten verlaufenden Führungsbahn-Bereich 14, 14' dabei eine Krümmung auf, welche tangential an einen horizontal verlaufenden Bereich anschließt.

Nach dem Anheben bzw. Absenken der Kugeln werden diese dann über eine gekrümmte Strecke um 180° umgelenkt und sodann wieder abgesenkt oder angehoben.

Im Ausführungsbeispiel liegen die beiden Teilstrecken 7 und 9 in der gleichen horizontalen Ebene, so dass die Umlenkstrecken spiegelsymmetrisch bezüglich einer zwischen den beiden Teilstrecken verlaufenden vertikalen Ebene ausgeführt sein können.

Um die Herstellung zu vereinfachen, sind wie in Fig. 5 für die unteren Umlenkstrecken angedeutet, die Umlenkstrecken im Ausführungsbeispiel aus zwei Teilen 21 und 22 zusammengesetzt, wobei die Führungsbahn für die Wälzkörper 4 zwischen einem oberen Teil 22 und dem unteren Teil 21 verläuft. Hierdurch können die Führungsbahnbereiche jeweils in die entsprechende Seite des Teil 21 und 22 eingefräst werden.

Die Teilungsfuge 20 verläuft dabei so, dass zumindest in dem nach oben oder unten verlaufenden Führungsbahn-Bereich 14, 14' der gesamte belastete Bereich auf einem der beiden Teile 21 oder 22 angeordnet ist. Insbesondere erstreckt sich die Teilungsfuge 20 daher entlang der Seitenwände der Führungsbahn. Um dem Verlauf der Führungsbahn zu folgen, kann die Teilungsfuge 20 dabei eine in sich gekrümmte Fläche aufspannen.

Alternativ wäre eine Herstellung der Umlenkstrecken durch ein Gussverfahren oder im Wege des 3D-Drucks ebenfalls denkbar. Weiterhin können die Umlenkstrecken jeweils als einstückiges Element gefertigt sein.

Die Führungsbahn der Umlenkstrecken umgreift die Wälzkörper im Ausführungsbeispiel um mehr als 180°, sie muss dabei aber keine geschlossene Fläche bilden. Eine lediglich abschnittsweise oder punktuelle Führung in Umfangsrichtung, welche über mehr als 180° verteilt ist, reicht vielmehr aus.

Die Führungsbahnen 15 der ersten und zweiten Teilstrecke umgreifen die Wälzkörper ebenfalls um mehr als 180°, um ein Herausfallen der Wälzkörper in einem Bereich, aus welchem das erste oder zweite Schienenelement herausgeschoben wurde, zu verhindern.

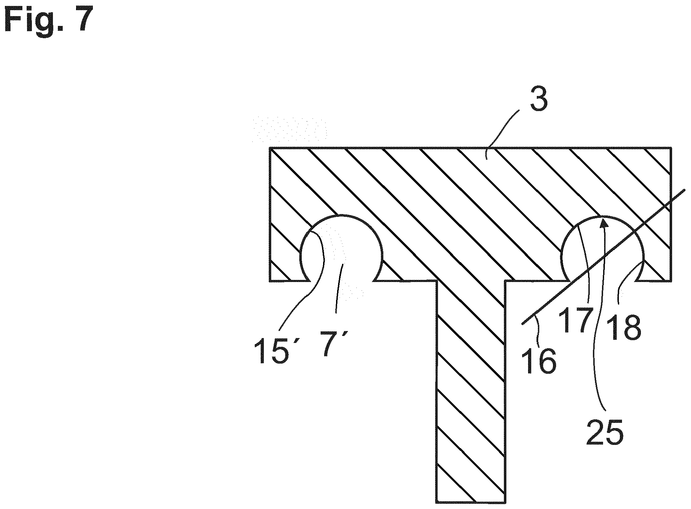

Ein für das Ausführungsbeispiel eingesetztes Profil ist dabei in Fig. 7 in einer Schnittansicht durch die beiden oberen Führungsbahnen 15' des mittleren Schienenelementes 3 gezeigt.

Um die Herstellung der Führungsbahn zu vereinfachen, kann auch diese jeweils aus zwei Teilelementen 17 und 18 zusammengesetzt sein. Durch den zweiteiligen Aufbau kann die Führungsbahn gefräst werden.

Mit 16 ist dabei der Verlauf der Teilungsfuge gezeigt. Diese verläuft im Ausführungsbeispiel in Auszugsrichtung neben einem Bereich 25, in welchem sich der Druckpunkt der Wälzköper befindet. Die Teilung der Führungsbahn erfolgt daher nicht mittig, sondern seitlich der Mitte. Das Teilelement 18 dient daher nur der seitlichen Führung und der Halterung der Wälzkörper in der Führungsbahn, während die Last durch das Teilelement 17 aufgenommen wird.

Bevorzugt erfolgt die Teilung dabei so, dass das Teilelement 17 mechanisch mit dem mittleren Schienenelement 3 verbunden ist, während das andere Teilelement 18 nur über das Teilelement 17 mit der dem mittleren Schienenelement 3 mechanisch verbunden ist.

Alternativ wäre eine Herstellung der Teilstrecken durch ein Gussverfahren oder im Wege des 3D-Drucks ebenfalls denkbar. Weiterhin können die Teilstrecken jeweils oder zwei zusammengehörige Teilstrecken zusammen als einstückiges Element gefertigt sein.

Die Teilstrecken und die Umlenkstrecken werden bevorzugt als zwei separate Elemente gefertigt, welche dann aneinander montiert werden. So ist es denkbar, die Führungsbahnen der Teilstrecken in das Material des mittleren Teleskopelements einzufräsen und die Umlenkstrecken an dem mittleren Teleskopelement zu montieren.

Weiterhin wäre es denkbar, die Teilstrecken und die Umlenkstrecken als ein einteiliges Element zu fertigen, bspw. durch ein Gussverfahren oder im Wege des 3D-Drucks.

Im Ausführungsbeispiel laufen die Wälzkörper ohne Käfig frei in der Umlaufbahn um. Wenn nötig könnten diese jedoch auch durch einen entsprechend flexibel ausgestalteten Käfig miteinander verbunden sein.

Wie in Fig. 1 gezeigt sind die Schienenelemente über eine Schienen-Synchronisierungsanordnung 11, 12 mechanisch so zwangsgekoppelt, dass bei einer Längsverschiebung des ersten Schienenelementes 1 gegenüber dem zweiten Schienenelement 3 das mittlere Schienenelement 2 sowohl gegenüber dem ersten als auch dem zweiten Schienenelement längsverschoben wird.

Die Zwangskopplung erfolgt im Ausführungsbeispiel über ein am mittleren Schienenelement angeordnetes Ritzel 11, welches mit den beiden am ersten und am zweiten Schienenelement 1, 2 angeordneten Zahnstangen 12 kämmt. Die Zahnstangen 12 sind in Fig. 1 dabei zur besseren Sichtbarkeit des Ritzels 11 gekürzt dargestellt, kämmen in Wirklichkeit aber in jeder Auszugsposition mit dem Ritzel 11.

Im Ausführungsbeispiel ist das Ritzel 11 auf der Oberseite des mittleren Schienenelements sowie die Zahnstangen 12 jeweils über Haltebügel an den Seitenflächen des ersten und des zweiten Schienenelements 1, 2 angeordnet.

Details der Schienen-Synchronisierungsanordnung oder alternative Ausgestaltungen der Schienen-Synchronisierungsanordnung können der früheren Anmeldung der Anmelderin DE 10 2018 118 973 entnommen werden, deren Schienen-Synchronisierungsanordnungen identisch auch für die vorliegende Erfindung zum Einsatz kommen können.

An dem ersten oder zweiten Schienenelement 1, 2 kann ein nicht dargestellter Linearantrieb angreifen, über welchen das Schienenelement gegenüber jeweils anderen Schienenelement längsverschieblich ist.

Es handelt sich bei dem Linearantrieb beispielsweise um einen parallel zum ersten oder zweiten Schienenelement verlaufenden, um zwei Umlenkrollen umlaufenden Riemen, wobei mindestens eine der beiden Umlenkrollen motorisch angetrieben ist. Der Riemen steht dabei mit dem ersten oder zweiten Schienenelement über einen Mitnehmer in Verbindung und bewegt dieses. Alternativ wäre aber auch ein Antrieb bspw. über ein Hydraulik- oder Pneumatikzylinder denkbar.

Alle drei Schienenelemente weisen im Ausführungsbeispiel eine balkenförmige Grundform auf, wobei die Schienenelemente zumindest in einem mittleren Bereich nebeneinander angeordnet sind. Die Höhe der Schienenelemente ist bevorzugt größer als deren Dicke in dem Bereich, in welchem alle drei Schienenelemente nebeneinander angeordnet sind, bevorzugt mindestens dreimal so hoch wie die Dicke. Das mittlere Schienenelement weist im Ausführungsbeispiel im Querschnitt eine um 90° gedreht Form eines H auf, und umgreift das erste und das zweite Schienenelement dabei oben und unten.

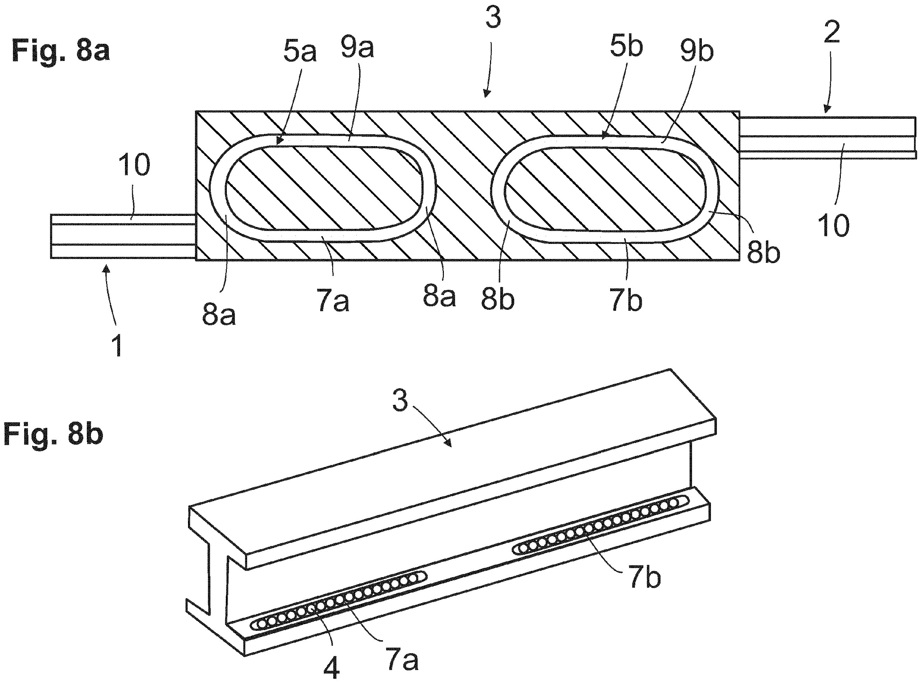

Fig. 8a und 8b zeigen ein zweites Ausführungsbeispiel einer erfindungsgemäßen Teleskopschiene, für welche die obige Beschreibung des ersten Ausführungsbeispiels ebenfalls zutrifft, weshalb diese nicht wiederholt wird.

Insbesondere umfasst die Teleskopschiene ein erstes Schienenelement 1 sowie ein zweites Schienenelement 2, welche jeweils längsverschieblich an einem mittleren Schienenelement 3 gelagert sind.

Die Lagerung erfolgt bei dem zweiten Ausführungsbeispiel nunmehr über zwei in Auszugsrichtung hintereinander angeordnete Wälzlager mit jeweils einer Umlaufbahn 5a und 5b, so dass hier zwei hintereinander angeordnete Tragezonen vorgesehen sind.

Während die Teleskopschiene gemäß dem ersten Ausführungsbeispiel in Auszugsrichtung daher nur einen Umlauf und damit eine zusammenhängende Tragezone aufweist, sind bei der Teleskopschiene gemäß dem zweiten Ausführungsbeispiel zwei Umlaufbahnen und damit zwei getrennte Tragezonen hintereinander in Auszugsrichtung angeordnet. Hierdurch kann die Länge der einzelnen Umlaufbahn verringert werden.

Die Umlaufbahnen 5a und 5b weisen den gleichen Aufbau auf, welcher bereits oben im Hinblick auf die Umlaufbahn 5 des ersten Ausführungsbeispiels beschrieben wurde.

Insbesondere umfassen die beiden Umlaufbahnen 5a und 5b jeweils Teilstrecken 7a, 9a bzw. 7b, 9b, welche über Umlenkstrecken 8a bzw. 8b miteinander in Verbindung stehen. Die auf den Teilstrecken 7a und 7b laufenden Wälzkörper wälzen dabei mit der Führungsbahn 10 des ersten Schienenelementes 2 ab, die auf den Teilstrecken 9a und 9b laufenden Wälzkörper wälzen dagegen mit der Führungsbahn 10 des zweiten Schienenelementes 3 ab.

Das mittlere Schienenelement 3 ist im zweiten Ausführungsbeispiel bevorzugt einstückig mit den beiden Umlaufbahnen 5a und 5b im Wege des 3D-Drucks oder durch eine Gussverfahren gefertigt.

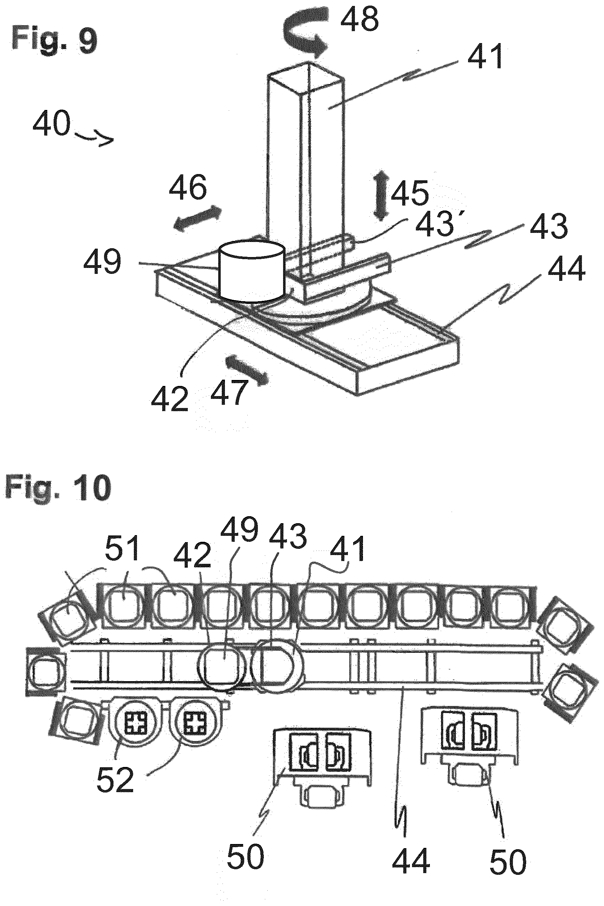

Fig. 9 zeigt ein Ausführungsbeispiel für ein Werkstück-Handling-Gerät 40 bzw. Werkstück-Handling-System, bei welchem erfindungsgemäße Teleskopschienen für eine horizontale Verfahrbewegung der Werkstücke sorgen.

Dabei ist ein Handling-Element 42 für Werkstücke 49, insbesondere ein Greifer, eine Gabel und/oder Ablageplatte, über mindestens zwei Teleskopschienen 43, 43' an einem Basiselement 41 angeordnet ist, wobei das Basiselement bevorzugt eine oder mehrere Bewegungsachsen aufweist. Im Ausführungsbeispiel ist ein Schlitten, an welchem die Teleskopschienen 43, 43' mit ihren inneren Schienenelementen montiert sind, vertikal in Richtung 45 an dem Basiselement 41 in Form eines Turms verfahrbar. Das Basiselement 41 ist weiterhin um eine vertikale Drehachse 48 drehbar und in horizontaler Richtung 46 und/oder 47 an einer Führung 44 verfahrbar.

Fig. 10 zeigt ein Werkstück-Handling-System in Form eines Palettenspeichers mit einem Werkstück-Handling-Gerät 40, wie es in Fig. 9 gezeigt ist. Hier sind eine Mehrzahl von Speicherzellen 51, Rüstplätze 52 und Werkzeugmaschienen 50 rings um das auf der Führung 44 verfahrbare Basiselement 41 angeordnet. Durch ein Ausfahren der Teleskopschienen können Werkstücke und/oder Paletten mit einem oder mehreren Werkstücken in die Speicherzellen 51, Rüstplätze 52 und Werkzeugmaschienen 50 hinein verfahren bzw. aus diesen wieder entnommen werden.

## Patentansprüche

1. Teleskopschiene mit mindestens einem ersten und einem zweiten Schienenelement (1, 2), welche jeweils über Wälzkörper (4) längsverschieblich an einem dritten, mittleren Schienenelement (3) gelagert sind, wobei die Wälzkörper (4) in mindestens einer Umlaufbahn (7, 8, 9) umlaufen,
wobei die Umlaufbahn (7, 8, 9) an dem mittleren Schienenelement (3) angeordnet ist,
wobei die Umlaufbahn (7, 8, 9) eine erste und eine zweite, jeweils in Auszugsrichtung der Teleskopschiene verlaufende Teilstrecke (7, 9) aufweist, wobei die Teilstrecken (7, 9) an ihren Enden jeweils über eine Umlenkstrecke (8) miteinander verbunden sind, wobei die erste Teilstrecke (7) der Lagerung des ersten Schienenelementes (1) an dem mittleren Schienenelement (3) und die zweite Teilstrecke (9) der Lagerung des zweiten Schienenelementes (2) an dem mittleren Schienenelement (3) dient,
**dadurch gekennzeichnet,**
**dass** die erste und/oder die zweite Teilstrecke (7, 9) die Wälzkörper (4) über mehr als 180° umgreifen.

2. Teleskopschiene nach Anspruch 1, wobei die Wälzkörper (4) zur Lagerung des ersten Schienenelementes (1) zwischen einer Führungsbahn (15) der ersten Teilstrecke (7) und einer Führungsbahn (10) des ersten Schienenelementes (1) und/oder zur Lagerung des zweiten Schienenelementes (2) zwischen einer Führungsbahn (15) der zweiten Teilstrecke (2) und einer Führungsbahn (10) des zweiten Schienenelementes (2) abwälzen.

3. Teleskopschiene nach Anspruch 2, wobei die Umlenkstrecken (8) so ausgestaltet sind, dass sie dann, wenn die jeweiligen Führungsbahnen (10, 15), zwischen welchen die Wälzkörper (4) abwälzen, vertikal übereinander angeordnet werden, die Wälzkörper (4) jeweils aus der einen Teilstrecke (7) nach oben oder unten herausführen und nach der Umlenkung in die Ebene der anderen Teilstrecke (9) hineinführen.

4. Teleskopschiene nach Anspruch 3, wobei die Umlenkstrecke (8) zum Heraus- bzw. Hineinführen der Wälzkörper (4) einen einer Führungsbahn (10) des ersten bzw. zweiten Schienenelementes (1, 2) vertikal gegenüberliegenden, nach oben oder unten verlaufenden Führungsbahn-Bereich (14) aufweist, welcher bevorzugt zumindest entlang der Kontaktstrecke mit dem Wälzkörper (4) tangential in eine Führungsbahn (15) der jeweiligen Teilstrecke (7, 9) mündet, und/oder wobei die Umlenkstrecke (8) weiterhin eine dem nach oben oder unten verlaufenden Führungsbahn-Bereich (14) gegenüberliegende Anlaufschräge (13) aufweist, welche die Wälzkörper (4) bei entsprechender Bewegungsrichtung der Wälzkörper (4) in die Umlenkstrecke (8) leitet.

5. Teleskopschiene nach einem der vorangegangenen Ansprüche, wobei die beiden Teilstrecken (7, 9) in der gleichen horizontalen Ebene liegen und/oder die Umlenkstrecken (8) spiegelsymmetrisch bezüglich einer zwischen den beiden Teilstrecken (7, 9) verlaufenden vertikalen Ebene sind und/oder wobei mindestens zwei Umlaufbahnen und/oder Teilstrecken von Umlaufbahnen in Auszugsrichtung hintereinander angeordnet sind.

6. Teleskopschiene nach einem der vorangegangenen Ansprüche, wobei die Umlenkstrecken (8) jeweils als ein mindestens zweiteiliges Bauelement gefertigt sind, wobei eine Führungsbahn (15) für die Wälzkörper (4) zwischen einem oberen und einem unteren Teilelements (22, 21) des Bauelements verläuft, wobei die Führungsbahn (15) bevorzugt jeweils in die entsprechende Seite des oberen und des unteren Teilelements (22, 21) des Bauelements gefräst ist.

7. Teleskopschiene insbesondere nach einem der vorangegangenen Ansprüche mit mindestens zwei über Wälzkörper (4) längsverschieblich aneinander gelagerten Schienenelementen (1, 2, 3), wobei die Wälzkörper (4) in einer Tragezone in einer Führungsbahn (15) geführt sind, welche diese über mehr als 180° umgreift, **dadurch gekennzeichnet, dass** die Führungsbahn (15) aus mindestens zwei Teilelementen (22, 21) zusammengesetzt ist, wobei die Teilungsfuge (20) beabstandet zu einem Druckpunkt der Wälzköper (4) und/oder außermittig entlang der Führungsbahn (15) verläuft.

8. Teleskopschiene nach einem der vorangegangenen Ansprüche, wobei es sich bei den Wälzkörpern (4) um Kugeln handelt und/oder wobei die Wälzkörper (4) ohne Käfig frei in der Umlaufbahn umlaufen, und/oder wobei sich das erste und das zweite Schienenelement (1, 2) entlang der Seitenflächen des mitterlen Schienenelements (3) erstrecken und/oder wobei an dem mittleren Schienenelement (3) mindestens zwei vertikal übereinander angeordnete Umlaufbahnen vorgesehen sind, zwischen welchen das erste und/oder das zweite Schienenelement (1, 2) geführt sind.

9. Teleskopschiene nach einem der vorangegangenen Ansprüche, wobei die Schienenelemente (1, 2, 3) über eine Schienen-Synchronisierungsanordnung (11, 12) mechanisch so zwangsgekoppelt sind, dass bei einer Längsverschiebung des ersten Schienenelementes (1) gegenüber dem zweiten Schienenelement (2) das mittlere Schienenelement (3) sowohl gegenüber dem ersten als auch dem zweiten Schienenelement längsverschoben wird, wobei die Schienen-Synchronisierungsanordnung (11, 12) bevorzugt so ausgelegt ist, dass die Längsverschiebung des ersten Schienenelementes (1) gegenüber dem mittleren Schienenelement (3) der Längsverschiebung des mittleren Schienenelementes (3) gegenüber dem zweiten Schienenelement (2) entspricht.

10. Teleskopschiene nach Anspruch 9, wobei die Schienen-Synchronisierungsanordnung (11, 12) ein Ritzel (11) umfasst, welches am mittleren Schienenelement (3) gelagert ist und mit Zahnstangen (12), welche am ersten und am zweiten Schienenelement (1, 2) vorgesehen sind, kämmt und/oder wobei die Schienen-Synchronisierungsanordnung mindestens ein Zugelement, insbesondere ein Seil oder Band, umfasst, dessen Enden an dem ersten und dem zweiten Schienenelement (1, 2) befestigt sind und welches über ein am mittleren Schienenelement (3) vorgesehenen Umlenkelement umgelenkt wird, wobei bevorzugt zwei Zugelemente vorgesehen sind, welche in entgegengesetzte Richtungen wirken.

11. Teleskopschiene nach einem der vorangegangenen Ansprüche, mit einem Antrieb, welcher an dem ersten oder zweiten Schienenelement (1, 2) angreift, um die Schienenelemente gegeneinander zu verschieben, wobei der Antrieb bevorzugt über einen umlaufenden Riemen erfolgt, welcher über einen Mitnehmer mit dem ersten oder zweiten Schienenelement (1, 2) gekoppelt ist, und/oder wobei das mittlere Schienenelement (3) das erste und/oder zweite Schienenelement (1, 2) auf der Unter- und Oberseite umgreift, und/oder wobei das erste und/oder zweite Schienenelement (1, 2) auf der Unter- und der Oberseite Führungsbahnen (10) aufweist, auf welcher die Wälzkörper (4) abwälzen.

12. Werkstück-Handling-System mit mindestens einer Teleskopschiene nach einem der vorangegangenen Ansprüche.

13. Werkstück-Handling-System nach Anspruch 12, wobei ein Handling-Element (42) für Werkstücke, insbesondere ein Greifer, eine Gabel und/oder Ablageplatte, über mindestens zwei Teleskopschienen (43, 43`) an einem Basiselement (41) angeordnet ist, wobei das Basiselement (41) bevorzugt eine oder mehrere Bewegungsachsen aufweist.

14. Werkstück-Handling-System nach Anspruch 12 oder 13, wobei es sich bei dem Werkstück-Handling-System um ein Regalbediengerät für ein Palettenspeichersystem handelt, wobei das Handling-Element (42) bevorzugt zum Einbringen und/oder Entnehmen von Werkstücken und/oder Paletten in Speicherfächer (51) dient.

## Claims

1. A telescopic rail having at least one first and one second rail element (1, 2), each of which is supported for longitudinal displacement on a third, middle rail element (3) by way of rolling elements (4), wherein the rolling elements (4) circulate in at least one circulation path (7, 8, 9),
wherein the circulation path (7, 8, 9) is arranged on the middle rail element (3),
wherein the circulation path (7, 8, 9) has a first and a second section (7, 9), each running in the extension direction of the telescopic rail, wherein the sections (7, 9) are connected to each other at the ends thereof in each case via a redirecting section (8), wherein the first section (7) serves to support the first rail element (1) on the middle rail element (3) and the second section (9) serves to support the second rail element (2) on the middle rail element (3),
**characterized in that**
the first and/or the second section (7, 9) surround(s) the rolling elements (4) over more than 180°.

2. The telescopic rail according to claim 1, wherein the rolling elements (4) roll between a guide track (15) of the first section (7) and a guide track (10) of the first rail element (1) to support the first rail element (1) and/or between a guide track (15) of the second section (2) and a guide track (10) of the second rail element (2) to support the second rail element (2).

3. The telescopic rail according to claim 2, wherein the redirecting sections (8) are designed in such a way that, when the respective guide tracks (10, 15) between which the rolling elements (4) roll are arranged vertically one above the other, they respectively guide the rolling elements (4) up or down out of the one section (7) and, after redirection, into the plane of the other section (9).

4. The telescopic rail according to claim 3, wherein, in order to guide the rolling elements (4) in or out, the redirecting section (8) has an upwardly or downwardly directed guide track area (14), which is vertically opposite a guide track (10) of the first or second rail element (1, 2) and which preferably leads, at least along the contact section with the rolling element (4), tangentially into a guide track (15) of the respective section (7, 9), and/or wherein the redirecting section (8) further has a run-on slope (13) opposite the upwardly or downwardly directed guide track area (14), which guides the rolling elements (4) into the redirecting section (8) when the rolling elements (4) are moving in the corresponding direction.

5. The telescopic rail according to one of the preceding claims, wherein the two sections (7, 9) are in the same horizontal plane and/or the redirecting sections (8) are arranged mirror-symmetrically in relation to a vertical plane running between the two sections (7, 9) and/or wherein at least two circulation paths and/or sections of circulation paths are arranged one behind the other in the extension direction.

6. The telescopic rail according to one of the preceding claims, wherein the redirecting sections (8) are each manufactured as an at least two-piece structural element, wherein a guide track (15) for the rolling elements (4) runs between an upper and a lower sub-element (22, 21) of the structural element, wherein the guide track (15) is preferably milled in each case into the corresponding side of the upper and the lower sub-element (22, 21) of the structural element.

7. The telescopic rail in particular according to one of the preceding claims, having at least two rail elements (1, 2, 3) supported on one another for longitudinal displacement by way of rolling elements (4), wherein the rolling elements (4) are guided in a support zone in a guide track (15), which encloses them over more than 180°, **characterized in that** the guide track (15) is composed of at least two sub-elements (22, 21), wherein the dividing joint (20) runs at a distance from a pressure point of the rolling elements (4) and/or eccentrically along the guide track (15).

8. The telescopic rail according to one of the preceding claims, wherein the rolling elements (4) are balls and/or wherein the rolling elements (4) circulate freely in the circulation path with no cage, and/or wherein the first and the second rail element (1, 2) extend along the side faces of the middle rail element (3) and/or wherein at least two circulation paths arranged vertically one above the other are provided on the middle rail element (3), between which the first and/or the second rail element(s) (1, 2) are guided.

9. The telescopic rail according to one of the preceding claims, wherein the rail elements (1, 2, 3) are mechanically forcibly coupled by way of a rail synchronization arrangement (11, 12) in such a way that when the first rail element (1) is longitudinally displaced relative to the second rail element (2), the middle rail element (3) is longitudinally displaced relative to both the first and the second rail element, wherein the rail synchronization arrangement (11, 12) is preferably designed such that the longitudinal displacement of the first rail element (1) relative to the middle rail element (3) corresponds to the longitudinal displacement of the middle rail element (3) relative to the second rail element (2).

10. The telescopic rail according to claim 9, wherein the rail synchronization arrangement (11, 12) comprises a pinion (11) which is supported on the middle rail element (3) and meshes with toothed racks (12) which are provided on the first and second rail element (1, 2), and/or wherein the rail synchronization arrangement comprises at least one tension element, in particular a rope or belt, the ends of which are fastened to the first and the second rail element (1, 2) and which is redirected via a redirecting element provided on the middle rail element (3), wherein preferably two tension elements are provided which act in opposite directions.

11. The telescopic rail according to one of the preceding claims, having a drive which acts on the first or second rail element (1, 2) in order to move the rail elements relative to one another, wherein the drive preferably takes place via a rotating belt which is coupled to the first or second rail element (1, 2) via a driver, and/or wherein the middle rail element (3) engages around the first and/or second rail element (1, 2) on the lower and upper side, and/or wherein the first and/or second rail element (1, 2) has guide tracks (10) on the lower and upper side, on which the rolling elements (4) roll.

12. A workpiece handling system having at least one telescopic rail according to one of the preceding claims.

13. The workpiece handling system according to claim 12, wherein a handling element (42) for workpieces, in particular a gripper, a fork and/or supporting plate, is arranged on a base element (41) by way of at least two telescopic rails (42, 43'), wherein the base element (41) preferably has one or more axes of movement.

14. The workpiece handling system according to claim 12 or 13, wherein the workpiece handling system is a storage and retrieval machine for a pallet storage system, wherein the handling element (42) preferably serves to insert and/or remove workpieces and/or pallets in storage compartments (51).

## Revendications

1. Rail télescopique avec au moins un premier et un deuxième élément de rail (1, 2), lesquels sont montés de manière à pouvoir coulisser longitudinalement sur un troisième élément de rail central (3) respectivement par l'intermédiaire de corps de roulement (4), dans lequel les corps de roulement (4) circulent en périphérie sur une moins une piste périphérique (7, 8, 9),
dans lequel la piste périphérique (7, 8, 9) est disposée sur l'élément de rail central (3),
dans lequel la piste périphérique (7, 8, 9) présente un premier et un deuxième tronçon partiel (7, 9) s'étendant respectivement dans la direction d'extraction du rail télescopique, dans lequel les tronçons partiels (7, 9) sont reliés entre eux sur leurs extrémités respectivement par l'intermédiaire d'un tronçon de renvoi (8), dans lequel le premier tronçon partiel (7) sert au support du premier élément de rail (1) sur l'élément de rail central (3) et le deuxième tronçon partiel (9) sert au support du deuxième élément de rail (2) sur l'élément de rail central (3),
**caractérisé en ce**
**que** le premier et/ou le deuxième tronçon partiel (7, 9) entourent les corps de roulement (4) sur plus de 180°.

2. Rail télescopique selon la revendication 1, dans lequel les corps de roulement (4) roulent entre une piste de guidage (15) du premier tronçon partiel (7) et une piste de guidage (10) du premier élément de rail (1) pour le support du premier élément de rail (1) et/ou entre une piste de guidage (15) du deuxième tronçon partiel (2) et une piste de guidage (10) du deuxième élément de rail (2) pour le support du deuxième élément de rail (2).

3. Rail télescopique selon la revendication 2, dans lequel les tronçons de renvoi (8) sont configurés de telle sorte que, lorsque les pistes de guidage (10, 15) respectives, entre lesquelles les corps de roulement (4) roulent, sont disposées verticalement les unes au-dessus des autres, ils sortent de manière guidée les corps de roulement (4) vers le haut ou vers le bas respectivement hors d'un tronçon partiel (7) et les rentrent de manière guidée après le renvoi dans le plan de l'autre tronçon partiel (9).

4. Rail télescopique selon la revendication 3, dans lequel le rail de renvoi (8) destiné à sortir ou entrer de manière guidée les corps de roulement (4) présente une zone de pise de guidage (14) faisant face verticalement à une piste de guidage (10) du premier ou du deuxième élément de rail (1, 2), s'étendant vers le haut ou vers le bas, laquelle débouche de manière tangentielle dans une piste de guidage (15) du tronçon partiel (7, 9) respectif de manière préférée au moins le long du tronçon de contact avec le corps de roulement (4) et/ou dans lequel le tronçon de renvoi (8) présente par ailleurs une rampe (13) faisant face à la zone de piste de guidage (14) s'étendant vers le haut ou vers le bas, laquelle guide les corps de roulement (4) dans le cas d'une direction de déplacement correspondante des corps de roulement (4) dans le tronçon de renvoi (8).

5. Rail télescopique selon l'une quelconque des revendications précédentes, dans lequel les deux tronçons partiels (7, 9) se situent dans le même plan horizontal et/ou les tronçons de renvoi (8) sont symétriques en miroir par rapport à un plan vertical s'étendant entre les deux tronçons partiels (7, 9) et/ou dans lequel au moins deux pistes périphériques et/ou tronçons partiels de pistes périphériques sont disposés les uns derrière les autres dans la direction d'extraction.

6. Rail télescopique selon l'une quelconque des revendications précédentes, dans lequel les tronçons de renvoi (8) sont fabriqués respectivement en tant qu'un élément de construction au moins en deux parties, dans lequel une piste de guidage (15) pour les corps de roulement (4) s'étend entre un élément partiel supérieur et un élément partiel inférieur (22, 21) de l'élément de construction, dans lequel la piste de guidage (15) est fraisée de manière préférée respectivement dans le côté correspondant de l'élément partiel supérieur et de l'élément partiel inférieur (22, 21) de l'élément de construction.

7. Rail télescopique en particulier selon l'une quelconque des revendications précédentes, avec au moins deux éléments de rail (1, 2, 3) montés l'un sur l'autre de manière à pouvoir coulisser longitudinalement par l'intermédiaire de corps de roulement (4), dans lequel les corps de roulement (4) sont guidés dans une zone de support dans une piste de guidage (15), laquelle entoure ceux-ci sur plus de 180°, **caractérisé en ce que** la piste de guidage (15) se compose d'au moins deux éléments partiels (22, 21), dans lequel le joint de séparation (20) s'étend de manière espacée par rapport à un point de pression des corps de roulement (4) et/ou de manière excentrée le long de la piste de guidage (15).

8. Rail télescopique selon l'une quelconque des revendications précédentes, dans lequel les corps de roulement (4) sont des billes et/ou dans lequel les corps de roulement (4) circulent en périphérie sans cage librement sur la piste périphérique, et/ou dans lequel le premier et le deuxième élément de rail (1, 2) s'étendent le long des faces latérales de l'élément de rail central (3) et/ou dans lequel sont prévues sur l'élément de rail central (3) au moins deux pistes périphériques disposées verticalement l'une au-dessus de l'autre, entre lesquelles le premier et/ou le deuxième élément de rail (1, 2) sont guidés.

9. Rail télescopique selon l'une quelconque des revendications précédentes, dans lequel les éléments de rail (1, 2, 3) sont couplés de manière forcée mécaniquement par l'intermédiaire d'un ensemble de synchronisation de rails (11, 12) de telle sorte que lors d'un coulissement longitudinal du premier élément de rail (1) par rapport au deuxième élément de rail (2), l'élément de rail central (3) est coulissé longitudinalement à la fois par rapport au premier et par rapport au deuxième élément de rail, dans lequel l'ensemble de synchronisation de rails (11, 12) est conçu de manière préférée de telle sorte que le coulissement longitudinal du premier élément de rail (1) par rapport à l'élément de rail central (3) correspond au coulissement longitudinal de l'élément de rail central (3) par rapport au deuxième élément de rail (2).

10. Rail télescopique selon la revendication 9, dans lequel l'ensemble de synchronisation de rails (11, 12) comprend un pignon (11), lequel est monté sur l'élément de rail central (3) et s'engrène avec des crémaillères (12), lesquelles sont prévues sur le premier et sur le deuxième élément de rail (1, 2), et/ou dans lequel l'ensemble de synchronisation de rails comprend au moins un élément de traction, en particulier un câble ou une bande, dont les extrémités sont fixées sur le premier et le deuxième élément de rail (1, 2), et lequel est renvoyé par l'intermédiaire d'un élément de renvoi prévu sur l'élément de rail central (3), dans lequel sont prévus de manière préférée deux éléments de traction, lesquels agissent dans des directions opposées.

11. Rail télescopique selon l'une quelconque des revendications précédentes, avec un entraînement, lequel s'engage sur le premier ou le deuxième élément de rail (1, 2) pour faire coulisser l'un à l'encontre de l'autre les éléments de rail, dans lequel l'entraînement est effectué de manière préférée par l'intermédiaire d'une courroie circulant en périphérie, laquelle est couplée au premier et au deuxième élément de rail (1, 2) par l'intermédiaire d'un entraîneur, et/ou dans lequel l'élément de rail central (3) entoure le premier et/ou le deuxième élément de rail (1, 2) sur la partie inférieure et la partie supérieure, et/ou dans lequel le premier et/ou le deuxième élément de rail (1, 2) présente sur le côté inférieur et le côté supérieur des pistes de guidage (10), sur lesquelles les corps de roulement (4) roulent.

12. Système de manutention de pièce avec au moins un rail télescopique selon l'une quelconque des revendications précédentes.

13. Système de manutention de pièce selon la revendication 12, dans lequel un élément de manutention (42) pour des pièces, en particulier un grappin, une fourche et/ou une plaque de réception, est disposé sur un élément de base (41) par l'intermédiaire d'au moins deux rails télescopiques (43, 43'), dans lequel l'élément de base (41) présente de manière préférée un ou plusieurs axes de déplacement.

14. Système de manutention de pièce selon la revendication 12 ou 13, dans lequel le système de manutention de pièce est un appareil d'utilisation de rayonnage pour un système de stockage de palettes, dans lequel l'élément de manutention (42) sert de manière préférée à introduire et/ou à retirer des pièces et/ou des palettes dans des compartiments de stockage (51).
